# EUROPÄISCHE PATENTSCHRIFT

(11) **EP 1 084 422 B1**
(45) Veröffentlichungstag und Bekanntmachung des Hinweises auf die Patenterteilung: **11.09.2002**
(21) Anmeldenummer: 00922556.6
(22) Anmeldetag: 27.03.2000
(51) Int. Cl.: G01S 7/40, G01S 7/52, G01S 13/60, G01S 15/60

(54) **VORRICHTUNG UND VERFAHREN ZUR BERÜHRUNGSLOSEN GESCHWINDIGKEITSMESSUNG AUF OBERFLÄCHEN**
DEVICE AND METHOD FOR CONTACTLESSLY MEASURING SPEED ON SURFACES
DISPOSITIF ET PROCEDE POUR MESURER UNE VITESSE SANS CONTACT SUR DES SURFACES

(30) Priorität: 30.03.1999 DE 19914486
(43) Veröffentlichungstag der Anmeldung: 21.03.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: MÖDL, Stefan, D-91161 Hilpoltstein (DE); WEBER, Norbert, D-91367 Weissenohe (DE); SAUERER, Josef, D-91074 Herzogenaurach (DE)
(74) Vertreter: Schoppe, Fritz, Dipl.-Ing.
(86) Internationale Anmeldenummer: EP0002682
(87) Internationale Veröffentlichungsnummer: WO00060372

(56) Entgegenhaltungen:
- EP-A- 0 831 336
- DE-A- 4 428 663
- DE-A- 19 501 228
- GB-A- 2 276 055
- US-A- 4 231 039
- US-A- 4 757 714
- KLEINHEMPEL W ET AL: "RADAR SIGNAL PROCESSING FOR VEHICLE SPEED MEASUREMENTS" PROCEEDINGS OF THE EUROPEAN SIGNAL PROCESSING CONFERENCE (EUSIPCO),NL,AMSTERDAM, ELSEVIER, Bd. CONF. 6, 24. August 1992 (1992-08-24), Seiten 1829-1832, XP000356607

## Beschreibung

Die vorliegende Erfindung bezieht sich auf eine Vorrichtung und ein Verfahren zur berührungslosen Messung der Geschwindigkeit eines sich über eine Oberfläche bewegenden Objekts, und insbesondere auf eine Vorrichtung und ein Verfahren zur berührungslosen Geschwindigkeitsmessung über Oberflächen mittels des Doppler-Prinzips unter Einsatz von Mikrowellenoder Ultraschall-Sensoren, insbesondere für Jogger oder Inline-Skater.

In den letzten Jahren hält die Leistungsdiagnostik zunehmend Einzug in den Freizeitsportbereich. Instrumentarien, die früher lediglich Spitzensportlern vorbehalten waren, werden in neuerer Zeit zunehmend auch von der breiten Masse der Freizeitsportler genutzt. Als Beispiel kann hier das Herzfrequenzmeßgerät erwähnt werden, das noch vor einigen Jahren aufgrund des hohen Preises nur von Spitzensportlern eingesetzt wurde, während es nun von einer Vielzahl von Freizeitsportlern zur persönlichen Gesundheitskontrolle verwendet wird.

Neben der Gesundheitskontrolle besteht jedoch auch ein zunehmender Bedarf danach, die jeweils erbrachte Leistung zu bewerten. Beim Fahrradfahren erfolgt dies beispielsweise durch die Angabe der Geschwindigkeit und der zurückgelegten Strecke im Fahrradtachometer. Bei einigen anderen Sportarten, beispielsweise dem Joggen, dem Inline-Skating, aber auch dem alpinen Skifahren oder dem Langlaufen, fehlen diese Informationen aufgrund nicht vorhandener bzw. mit großen Nachteilen verbundener Meßmethoden.

Alle bisher bekannten Verfahren zur berührungslosen Geschwindigkeitsmessung im Freizeitbereich sind entweder sehr störanfällig und ungenau, wenn es sich um mechanische Verfahren handelt, oder beinhalten Einschränkungen hinsichtlich der verwendeten Sensoren, beispielsweise Mikrowellensensoren oder Ultraschallsensoren.

Ein Verfahren zur Bestimmung der Geschwindigkeit, insbesondere eines Joggers, das in der DE 4428663 beschrieben ist, verwendet einen Sensor, der mit einer festen Frequenz in einem Winkel entgegen der Bewegungsrichtung auf die Oberfläche strahlt, das reflektierte Doppler-verschobene Signal empfängt und in das Basisband runtermischt. Eine Auswerteeinheit errechnet mit Hilfe der Fourier Transformation das Spektrum des Signals bei dem Winkel und leitet aus der höchsten darin enthaltenen Frequenz die Geschwindigkeit des Joggers ab.

Ein Verfahren zur berührungslosen Geschwindigkeitsmessung, insbesondere für Skifahrer, ist in der US 4,757,714 offenbart. Dabei wird ein Geschwindigkeitssensor und eine auf einem Helm befestigte Datenanzeige verwendet. Ein Sender ist an einem Ski befestigt und sendet Ultraschall- oder elektromagnetische Wellen in Richtung des stationären Mediums aus, über das sich der Skifahrer bewegt. Ein Element desselben Senders oder ein getrennter Wandler erfaßt Wellen, die von dem stationäre Medium reflektiert werden. Ein Computer berechnet die Geschwindigkeit der Ski aus der Dopplerverschiebung des reflektierten Signals und aktiviert eine Anzeigeeinheit, um die Geschwindigkeit anzuzeigen.

Problematisch bei dieser Art einer berührungslosen Geschwindigkeitsmessung über Oberflächen mittels des Doppler-Prinzips ist die Abhängigkeit der Doppler-verschobenen Frequenz vom Winkel zwischen dem Ultraschall- oder dem Mikrowellen-Sensor und der sich am Sensor vorbei bewegenden Oberfläche, wobei die Relativgeschwindigkeit zwischen Oberfläche und Sensor gemessen werden soll.

Aus dem Stand der Technik ist es nun bekannt, zwei um 90 Grad versetzte Sensoren zu verwenden, um die Winkelabhängigkeit der Sensoren zu kompensieren. Eine solche Anordnung ist als Janus-Anordnung bekannt. Nachteilig an dieser Anordnung ist zum einen, daß sie nicht für sämtliche Anwendungen möglich ist, da eine Befestigung der beiden Sensoren im Winkel von 90 Grad zur Bewegungsrichtung notwendig ist. Eine solche Anordnung ist beispielsweise bei Joggern nicht möglich. Überdies ist die Verwendung zweier Sensoren notwendig, was zum einen höhere Kosten verursacht und zum anderen treten, vor allem bei einem nach hinten gerichteten Wandler, leichter verwehungen des Schalls auf, wobei derartige Verwehungen eine genaue Messung von höheren Geschwindigkeiten beeinträchtigen.

Bei einem weiteren bekannten System zur berührungslosen Geschwindigkeitsmessung, das in der DE 19501228 beschrieben ist, ist ein Sensor verwendet, der eine breite Abstrahlcharakteristik besitzt, um den Einfluß der Winkelabhängigkeit gegenüber der Oberfläche gering zu halten. Wie in dieser Schrift offenbart ist, kann der Einfluß der Winkelabhängigkeit gegenüber der Oberfläche jedoch nur gering gehalten werden, wenn der Bestrahlungswinkel kleiner ist als ein halber Öffnungswinkel des das Signal abstrahlenden Sensors. Der Nachteil dieser bekannten Geschwindigkeitsmessung sind die benötigten Sensoren, die eine breite Abstrahlcharakteristik aufweisen müssen. Durch das fernmeldetechnische Zentralamt werden sowohl die zu benutzenden Frequenzen der Sensoren als auch die maximale Strahlungsleistung festgelegt. Das bedeutet, daß bei einem Sensor mit großem Öffnungswinkel, wie er gemäß der DE 19501228 benötigt wird, aufgrund der breiten Abstrahlcharakteristik nur eine eingeschränkte Leistungsdichte und damit maximale Reichweite des Sensors erhalten werden können. Anders ausgedrückt heißt das, daß die größtmögliche Reichweite mit einer sehr schmalen Abstrahlcharakteristik erreicht werden kann.

Bei Anwendungen im Freizeitsport, beispielsweise dem Joggen oder dem Inline-Skaten, befindet sich der Sensor in der Regel über einen Meter über der Erdoberfläche, so daß eine höhe Strahlungsleistungsdichte benötigt wird. Eine solche Strahlungsleistungsdichte kann jedoch bei dem in der DE 19501228 offenbarten Geschwindigkeitsmeßsystem aufgrund des relativ großen Abstrahlwinkels und der maximal zulässigen Strahlungsleistung häufig nicht erreicht werden. Somit eignet sich das in der DE 19501228 beschriebene Verfahren insbesondere zur Ski-Geschwindigkeitsmessung, wenn der Sensor im oder am Ski angebracht ist, wohingegen dasselbe bei anderen Freizeitsportaktivitäten, wie beispielsweise dem Joggen oder dem Inline-Skaten, bei denen der Sensor um einen größeren Abstand von der Erdoberfläche entfernt angeordnet ist, in der Regel keine brauchbaren Meßergebnisse liefert. Ein weiterer Nachteil des in der DE 19501228 beschriebenen Meßsystems besteht darin, daß Sensoren mit großem Abstrahlwinkel üblicherweise wesentlich teuerer und schlechter verfügbar sind als schmalkeulige Sensoren.

Die Aufgabe der vorliegenden Erfindung besteht darin, eine Vorrichtung und ein Verfahren zur berührungslosen Messung der Geschwindigkeit eines sich über eine Oberfläche bewegenden Objekts zu schaffen, die einerseits Meßergebnisse mit hoher Genauigkeit liefern und andererseits eine hohe Flexibilität hinsichtlich des Anwendungsbereichs liefern.

Diese Aufgabe wird durch eine Vorrichtung zur berührungslosen Geschwindigkeitsmessung nach Patentanspruch 1 sowie ein Verfahren zur berührungslosen Geschwindigkeitsmessung nach Patentanspruch 15 gelöst.

Die vorliegende Erfindung schafft eine Vorrichtung zur berührungslosen Messung der Geschwindigkeit eines sich über eine Oberfläche bewegenden Objekts, die eine Einrichtung zum Abstrahlen eines Signals mit einer festen Frequenz in einem Winkel in oder entgegen der Bewegungsrichtung auf die Oberfläche, wobei der Winkel durch die Bewegung des Objekts ständig verändert wird, und zum Empfangen eines von der Oberfläche reflektierten Doppler-verschobenen Signals aufweist. Ferner ist eine Einrichtung zum Kombinieren einer Mehrzahl von zeitlich nacheinander, bei verschiedenen Winkeln empfangenen Spektren von reflektierten, Doppler-verschobenen Signalen zum Erzeugen eines kombinierten Spektrums vorgesehen. Die Vorrichtung zur berührungslosen Geschwindigkeitsmessung weist ferner eine Einrichtung zum Erfassen des Spektralanteils mit der höchsten oder tiefsten Frequenz, der eine vorgegebene Signalleistung übersteigt, aus dem kombinierten Spektrum und eine Einrichtung zum Ableiten der Geschwindigkeit aus der Frequenz des erfaßten Spektralanteils auf.

Bei bevorzugten Ausführungsbeispielen der Erfindung ist eine Einrichtung zum Heruntermischen des empfangenen, an der Oberfläche reflektierten Signals in das Basisband vorgesehen. Wird das empfangene Signal in das Basisband heruntergemischt, so wird, unabhängig von der Abstrahlrichtung des Sensors, der Spektralanteil mit der höchsten Frequenz, der eine vorgegebene Signalleistung überschreitet, erfaßt. Andernfalls, beispielsweise wenn das empfangene Signal auf eine Zwischenfrequenz gemischt wird, wird der Spektralanteil mit der höchsten Frequenz erfaßt, wenn der Sensor in Bewegungsrichtung abstrahlt, und der Spektralanteil mit der tiefsten Frequenz, wenn der Sensor entgegen der Bewegungsrichtung abstrahlt.

Gemäß der vorliegenden Erfindung kann ein Sensor mit einer schmalen Abstrahlcharakteristik verwendet werden, der entweder in Bewegungsrichtung oder entgegen der Bewegungsrichtung angebracht ist. Bei Bestrahlung der Oberfläche, über die sich ein Objekt bewegt, tritt aufgrund der diffusen Reflexion des Sensorsignals an der Oberfläche ein Spektralanteil des Doppler-verschobenen Signals auf, der jedoch vom Bestrahlungswinkel abhängig ist. Es handelt sich bei diesem Spektralanteil um den höchsten im Dopplerspektrum auftretenden Frequenzanteil, der dann ein direktes Maß für die Geschwindigkeit darstellt. Um die Abhängigkeit des Ausgangssignals vom Winkel zwischen Sensor und Oberfläche zu kompensieren, wird erfindungsgemäß eine Mittelung über mehrere Sendeintervalle durchgeführt.

Eine natürliche Winkeländerung tritt bei einem bevorzugten Einsatzgebiet der vorliegenden Erfindung, nämlich der Geschwindigkeitserfassung im Freizeitsportbereich, beispielsweise dem Joggen oder dem Inline-Skaten, durch die Bewegungen des Freizeitsportlers, der den Sender trägt, auf. Durch die erfindungsgemäße Mittelung über die Zeit wird diese natürliche Änderung des Winkels, die dadurch bedingt ist, daß der Sensor nicht in einem festen Winkel zu der Oberfläche starr montiert ist, ausgenutzt, um eine Signalkomponente, die nahezu parallel zur Oberfläche verläuft, zu erfassen. Diese signalkomponente spiegelt die reale Geschwindigkeitskomponente wieder. Durch diese Mittelung über mehrere aufeinanderfolgende Meßperioden und die Ausnutzung der natürlichen Bewegung des Sensors, die durch den Einsatz desselben bedingt ist, kommt es zu einer zeitlichen Aufweitung des Abstrahlwinkels ohne einen Verlust an Reichweite. Ein solcher Verlust an Reichweite tritt auf, wenn Sensoren mit breiteren Abstrahlwinkeln verwendet werden würden.

Zur Auswertung des kombinierten Spektrums, das aus den einzelnen Spektren der empfangenen, reflektierten, Doppler-verschobenen Spektren gewonnen wird, wird dann der Spektralanteil mit der größten Frequenz, bzw. die "abfallende Flanke" des kombinierten Spektrums ermittelt. Andererseits wird der Spektralanteil mit kleinsten Frequenz, bzw. die "ansteigende Flanke" des Dopplerspektrums festgestellt, wenn der Sensor entgegen der Bewegungsrichtung abstrahlt und das empfangene Signal nicht in das Basisband, sondern beispielsweise auf eine Zwischenfrequenz gemischt wird. Die Feststellung des jeweiligen Spektralanteils kann mittels herkömmlicher Spektralanalyseverfahren oder durch Fouriertransformation erfolgen. Ferner kann das in der DE 19501228 beschriebene Verfahren verwendet werden, um den jeweiligen Spektralanteil aus dem kombinierten Spektrum zu gewinnen.

Die vorgegebene Signalleistung, die zum Erfassen des Spektralanteils mit der höchsten bzw. tiefsten Frequenz verwendet wird, wird gemäß bevorzugten Ausführungsbeispielen der vorliegenden Erfindung auf der Grundlage spezifischer Eigenschaften der Einrichtung zum Abstrahlen und Empfangen eingestellt, wobei diese spezifischen Eigenschaften vorzugsweise das 1/f-Rausch der Einrichtung zum Abstrahlen und Empfangen, d.h. des Sensors, umfassen. Ferner ist bei bevorzugten Ausführungsbeispielen der vorliegenden Erfindung eine Einrichtung zur Korrektur der abgeleiteten Geschwindigkeit zur Kompensation einer Geschwindigkeits-abhängigen Kurvenform des kombinierten Spektrums vorgesehen. Diese Geschwindigkeits-abhängige Korrektur ist vorteilhaft dahingehend, daß Ungenauigkeiten aufgrund der sich verändernden abfallenden bzw. ansteigenden Flanke des Spektrums mit steigender Geschwindigkeit kompensiert werden. Diese geschwindigkeitsabhängige Korrektur kann speziell auf jeden Sensortyp zugeschnitten werden. Durch die ständige Bewegung, die dem Sensor durch den Träger desselben vermittelt wird, treten Schwankungen des Abstands zwischen dem Sensor und der Oberfläche, auf der sich der Träger bewegt, auf. Signalpegelunterschiede aufgrund dieses schwankenden Abstands können mittels eines Verstärkers mit automatischer Verstärkungsregelung ausgeglichen werden.

Die vorliegenden Erfindung schafft ferner ein Verfahren zur berührungslosen Messung der Geschwindigkeit eines sich über eine Oberfläche bewegende Objekts, bei dem ein Signal mit einer festen Frequenz in einem Winkel in Bewegungsrichtung oder entgegen der Bewegungsrichtung auf die Oberfläche abgestrahlt wird, wobei der Winkel durch die Bewegung des Objekts ständig verändert wird. Ein von der Oberfläche reflektiertes, Doppler-verschobenes Signal wird empfangen. Die oben genannten Schritte werden wiederholt, um eine Mehrzahl von zeitlich nacheinander, bei verschiedenen Winkeln, empfangenen Spektren von reflektierten, Doppler-verschobenen Signalen zu erzeugen. Die Mehrzahl von zeitlich nacheinander empfangenen, Spektren von reflektierten, Doppler-verschobenen Signalen wird kombiniert, um ein kombiniertes Spektrum zu bilden. Der Spektralanteil mit der höchsten bzw. tiefsten Frequenz, der eine vorgegebene Signalleistung übersteigt, wird aus dem kombinierten Spektrum erfaßt, woraufhin die Geschwindigkeit aus der Frequenz des erfaßten Spektralanteils abgeleitet wird.

Die erfindungsgemäßen Vorrichtungen und Verfahren ermöglichen somit eine berührungslose Messung der Geschwindigkeit über Oberflächen unter Verwendung von Standardsensoren, Mikrowellensensoren oder Ultraschallsensoren, die eine schmale Sende- und Empfangs-Charakteristik aufweisen, wobei die Erfindung hochgenaue Meßergebnisse liefert. Darüberhinaus ermöglicht die vorliegende Erfindung die berührungslose Geschwindigkeitsmessung bei Freizeitsportarten, beispielsweise dem Joggen oder dem Inline-Skaten, bei denen eine solche genaue Messung bisher nicht möglich war.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1: schematisch den Einsatz einer erfindungsgemäßen Geschwindigkeitsmeßvorrichtung;
- Fig. 2: eine schematische Darstellung zur Veranschaulichung der natürlichen Winkeländerung zwischen Sensor und Oberfläche, die aufgrund des Einsatzes der Geschwindigkeitsmeßvorrichtung auftritt;
- Fig. 3: eine grobe schematische Darstellung eines Ausführungsbeispiels einer erfindungsgemäßen Geschwindigkeitsmeßvorrichtung;
- Fig. 4: ein Diagramm, das die Spektren von drei zeitlich nacheinander empfangenen reflektierten Signalen zeigt;
- Fig. 5: ein Diagramm, das die Kombination der in Fig. 4 gezeigten Spektren darstellt;
- Fig. 6: ein Diagramm, das erhaltene kombinierte Spektren bei unterschiedlichen Geschwindigkeiten zeigt;
- Fig. 7: eine weitere Darstellung der in Fig. 6 gezeigten Spektren zur Veranschaulichung der Geschwindigkeits-abhängigen Korrektur der Geschwindigkeit, die aus den Spektren abgeleitet wird;
- Fig. 8: ein Diagramm, das das 1/f-Rausche eines Sensors zeigt; und
- Fig. 9: bis 11 kombinierte Spektren für unterschiedliche Geschwindigkeiten, denen das 1/f-Rauschen des Sensors überlagert ist.

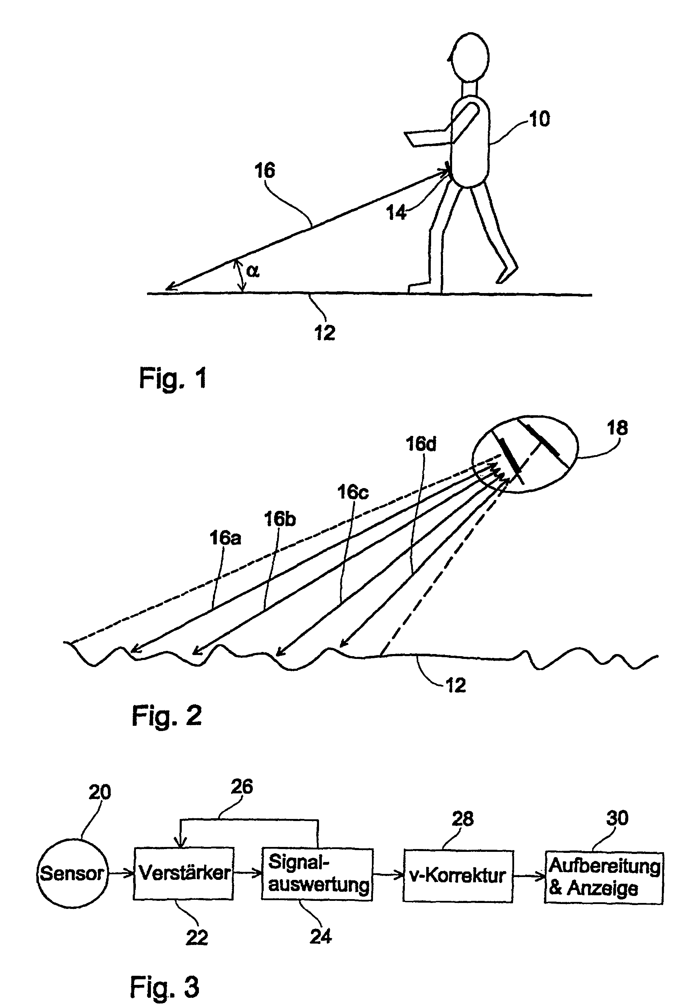

In Fig. 1 ist ein Jogger 10 dargestellt, der sich über eine Oberfläche 12 bewegt. Der Jogger trägt, beispielsweise an einem Gürtel, oder über eine beliebige andere Befestigung, die erfindungsgemäße Geschwindigkeitsmeßvorrichtung 14, die bei der Darstellung gemäß Fig. 1 derart angeordnet ist, daß der Sensor derselben in Laufrichtung abstrahlt. Alternativ wäre es in gleicher Weise möglich, die Geschwindigkeitsmeßvorrichtung 14 am Rücken des Joggers 10 anzuordnen, derart, daß der Sensor derselben entgegen der Laufrichtung abstrahlt. Durch die Laufbewegung des Joggers 10 wird eine natürliche Bewegung des Sensors der Geschwindigkeitsmeßvorrichtung 14 bewirkt, was wiederum eine Änderung des Winkels α zwischen dem von dem Sensor abgestrahlten Signal 16 und der Oberfläche 12, auf der der Jogger 10 läuft, zur Folge hat. Diese Variation des Einfallswinkels des von dem Sensor abgegebenen Signals auf die Oberfläche 12 ist in Fig. 2 schematisch durch Signale 16a, 16b, 16c und 16d dargestellt. Ebenfalls schematisch sind in der Umrandung 18 in Fig. 2 zwei unterschiedliche Stellungen der Geschwindigkeitsmeßvorrichtung 14 und damit des Sensors gezeigt. Werden nun zeitlich nacheinander mehrere aufeinanderfolgende Messungen durchgeführt, kommt es zu einer zeitlichen Aufweitung des Abstrahlwinkels, die durch die natürliche Kippbewegung des Sensors bewirkt wird, wie in Fig. 2 dargestellt ist. Wertet man nun die Mehrzahl von zeitlich aufeinanderfolgenden Messungen gemeinsam aus, um die Geschwindigkeit des Joggers 10 zu ermitteln, indem ein kombiniertes Spektrum aus dieser Mehrzahl von Messungen gebildet wird, kann eine Kompensation der Abhängigkeit des Sensorsignals vom Winkel zwischen Sensor und Oberfläche erreicht werden.

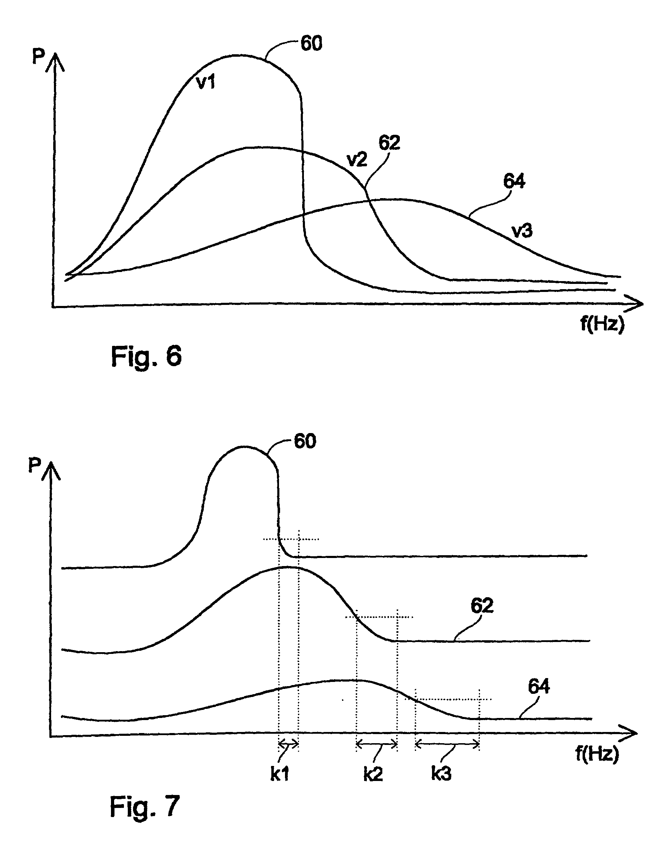

Fig. 3 zeigt ein grobes schematisches Blockdiagramm eines Ausführungsbeispiels der erfindungsgemäßen Vorrichtung zur berührungslosen Geschwindigkeitsmessung. Ein Sensor 20 ist über einen Verstärker 22 mit einer Signalauswertungseinheit 24 verbunden. Der Sensor kann ein Ultraschallsensor, der beispielsweise in einem Frequenzbereich von 40 kHz bis 200 kHz arbeitet, oder ein Mikrowellensensor, der beispielsweise in einem Bereich von 5 GHz bis 30 GHz arbeitet, sein. Der Verstärker 22 kann ein Verstärker mit automatischer Verstärkungsregelung sein, wie durch den Pfeil 26 angedeutet ist, um Schwankungen des Abstands zwischen dem Sensor 20 und der Oberfläche auszugleichen. Die Signalauswertungseinheit 24 ist mit einer v-Korrektureinheit 28 gekoppelt, in der eine Geschwindigkeitskorrektur durchgeführt wird, wie nachfolgend bezugnehmend auf die Fig. 6 und 7 näher erläutert wird. Schließlich ist eine Aufbereitungs- und Anzeige-Einheit 30 vorgesehen.

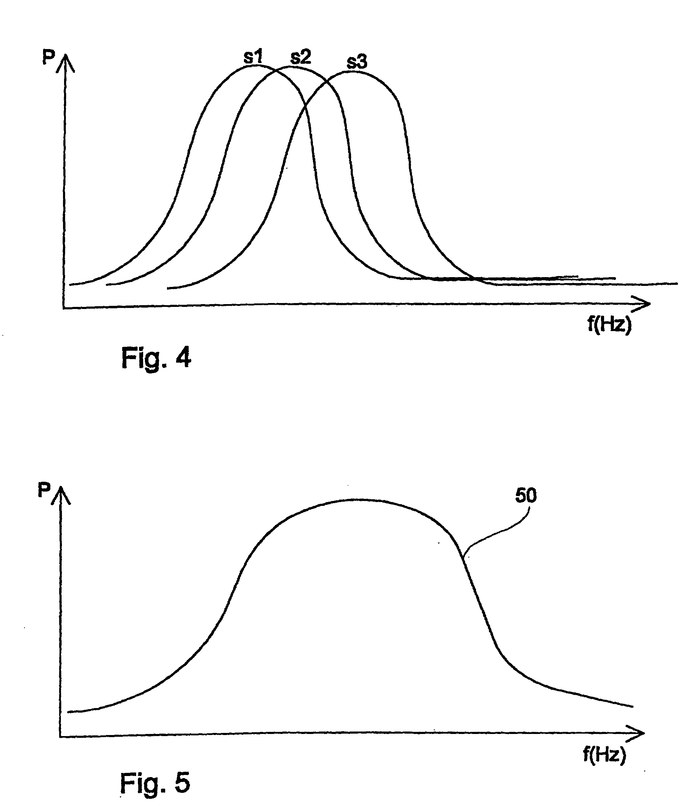

Im folgenden wird die Funktionsweise der erfindungsgemäßen Geschwindigkeitsmeßvorrichtung näher erläutert. Mittels des Sensors 20 wird jeweils ein Signal auf die Oberfläche abgestrahlt und das daraus resultierende an der Oberfläche reflektierte Signal wird durch den Sensor 20 empfangen und über den Verstärker 22 der Signalauswertung 24 zugeführt. Dieses empfangene Signal wird vorzugsweise in das Basisband heruntergemischt, oder alternativ auf eine Zwischenfrequenz gemischt. Dieser Vorgang wird erfindungsgemäß mehrfach wiederholt, wobei die jeweils empfangenen Signale beispielsweise in der Signalauswertungseinheit 24 gespeichert werden. Jedes der empfangenen, von der Oberfläche reflektierten, Doppler-verschobenen Signale besitzt ein Spektrum, das von dem Bestrahlungswinkel zwischen Signal und Oberfläche abhängig ist, wobei sich dieser Bestrahlungswinkel, wie oben erläutert wurde, aufgrund der Bewegung beispielsweise eines Joggers ändert. Zur Veranschaulichung sind in Fig. 4 drei Spektren s1, s2 und s3 gezeigt, die aus drei bei unterschiedlichem Bestrahlungswinkel empfangenen Signalen resultieren.

Erfindungsgemäß werden die zeitlich aufeinanderfolgend empfangenen Signale verwendet, um eine Mittelung über mehrere Perioden durchzuführen. Beim Joggen kann beispielsweise über mehrere Sekunden gemittelt werden, z. B. über 8 FFTs, da hier die Geschwindigkeit über mehrere Sekunden nahezu konstant ist, wenn man von einer geringen Beschleunigung ausgeht. Bei anderen Anwendungsgebieten kann alternativ eine Mittelung über einen anderen Zeitraum stattfinden, abhängig davon, was für Beschleunigungen zu erwarten sind.

Erfindungsgemäß wird nun die Mehrzahl von zeitlich aufeinanderfolgenden Signalen, die gemeinsam zur Messung der Geschwindigkeit verwendet wird, kombiniert, um ein kombiniertes Spektrum zu erzeugen. In Fig. 5 ist beispielsweise ein kombiniertes Spektrum 50 gezeigt, das durch Aufsummieren der einzelnen in Fig. 4 dargestellten Spektren s1, s2 und s3 erhalten wird. Wie gut in Fig. 5 zu erkennen ist, wird durch die Aufsummierung der einzelnen Spektren eine Aufweitung des resultierenden kombinierten Spektrums bewirkt, da der Winkel des Sensors bezüglich der vertikalen Richtung zur Oberfläche aufgrund der natürlichen Bewegung des Joggers nicht konstant bleibt. Aus dem in Fig. 5 dargestellten kombinierten Spektrum 50 erfolgt nun eine Auswertung der Geschwindigkeit. Hierbei wird, wie oben erläutert wurde, die höchste oder die niedrigste Frequenzkomponente, die einen vorbestimmten Leistungspegel bzw. Energiepegel übersteigt, ausgewertet.

Die Erfassung des Spektralanteils mit der höchsten bzw. niedrigsten Frequenz, der eine vorgegebene Signalleistung übersteigt, aus dem kombinierten Spektrum kann beispielsweise auf die Art und Weise erfolgen, die in der DE 19501228 zur Ermittlung eines Spektralanteils mit der höchsten bzw. tiefsten Frequenz, der eine vorgegebene Signalleistung übersteigt, beschrieben ist. Alternativ können beliebige bekannte Verfahren unter Verwendung einer Spektralanalyse bzw. einer Fouriertransformation verwendet werden, um den jeweiligen Frequenzanteil zu erfassen.

Zu der vorgegebenen Signalleistung, die der Spektralanteil, der der zu erfassenden Geschwindigkeit zugeordnet ist, übersteigen muß, trägt im wesentlichen das Rauschen, insbesondere das des Sensors, bei, wobei beispielsweise dann beurteilt wird, daß ein in dem kombinierten Spektrum auftretender Frequenzanteil ein direktes Maß für die Geschwindigkeit darstellt, wenn mehrere, beispielsweise vier, aufeinanderfolgende Werte des Spektrums den Rauschpegel um beispielsweise 3 dB übersteigen. Aus der Frequenz dieses, in der Signalauswertungseinheit 24 (Fig. 3) erfaßten Spektralanteils wird dann in bekannter Weise die Geschwindigkeit abgeleitet und vorzugsweise auf einer Anzeigeeinheit angezeigt. Die Anzeigeeinheit kann beispielsweise entfernt von der Geschwindigkeitsmeßeinrichtung am Handgelenk eines Benutzers erfolgen, oder alternativ in jeder anderen geeigneten Weise, wobei die Anzeigeeinrichtung von der erfindungsgemäßen Vorrichtung zur berührungslosen Geschwindigkeitsmessung angesteuert wird.

In der Aufbereitungs- und Anzeige-Einheit 30 kann ferner die Laufzeit erfaßt werden, so daß eine Berechnung der zurückgelegten Strecke möglich ist. Ferner kann eine Speicherung der Maximalgeschwindigkeiten und daraus eine Berechnung der Durchschnittsgeschwindigkeit erfolgen, wobei diese zusätzlichen Parameter bei Bedarf auf der Anzeigeeinheit wiedergegeben werden können. Ferner kann zusätzlich eine Einrichtung zur Erfassung der Herzfrequenz vorgesehen sein, um auch diesen Parameter auf der Anzeigeeinheit anzuzeigen.

Bezugnehmend auf die Fig. 6 bis 11 wird im folgenden dargelegt, wie erfindungsgemäß eine Geschwindigkeits-abhängige Korrektur implementiert sein kann bzw. der Einfluß des sensorspezifischen 1/f-Rauschens kompensiert werden kann. In Fig. 6 sind drei kombinierte Spektren 60, 62 und 64 gezeigt, die bei steigenden Geschwindigkeiten v1, v2 und v3 erhalten werden. Wie aus Fig. 6 zu erkennen ist, ändert sich der Abfall des jeweiligen Prequenzspektrums mit steigender Geschwindigkeit.

Die in Fig. 6 dargestellten Spektren 60 bis 64 sind in Fig. 7 in etwas verkleinerter Form übereinander gezeigt. Wird nun zur Ermittlung des Spektralanteils mit der höchsten Frequenz, der eine bestimmte Schwelle überschreitet, eine Schwelle von beispielsweise 3 dB über dem Rauschpegel angenommen, so ergibt sich ein Geschwindigkeits-abhängiger Fehler aufgrund der Abfallcharakteristik des jeweiligen Frequenzspektrums, der korrigiert werden muß. Dabei ist anzumerken, daß die richtige Geschwindigkeit erhalten wird, wenn jeweils die Frequenz des Fußpunktes der in Fig. 7 gezeigten Spektren verwendet wird, um die Geschwindigkeit abzuleiten. Somit ist bei der Ableitung der Geschwindigkeit eine Korrektur durchzuführen, die in der Geschwindigkeitskorrektureinheit 28 bewirkt wird. Dabei ist bei dem Spektrum 60 aufgrund des steileren Abfalls des Frequenzspektrums eine geringere Korrektur k1 notwendig, während der Korrekturfaktor für die Spektren, die bei zunehmenden Geschwindigkeiten entstehen, größer wird, wie durch die Korrekturfaktoren k2 und k3 in Fig. 7 gezeigt ist. Diese Korrekturfaktoren können beispielsweise in der erfindungsgemäßen Vorrichtung zur berührungslosen Geschwindigkeitsmessung gespeichert sein und zur Korrektur bei der Geschwindigkeitsermittlung verwendet werden.

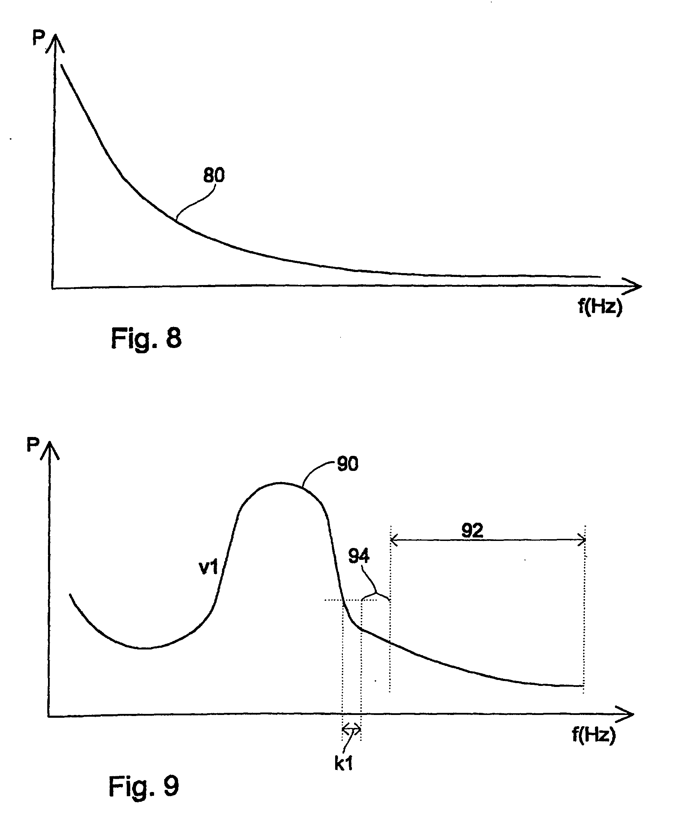

Überdies tritt in dem Frequenzbereich, in dem die Sensoren der erfindungsgemäßen Vorrichtung zur berührungslosen Geschwindigkeitsmessung arbeiten, ein starkes 1/f-Rauschen des Sensors auf, das vorzugsweise berücksichtigt werden kann, indem eine dynamische Berechnung des Rauschpegels durchgeführt wird. In Fig. 8 ist bei 80 das 1/f-Rauschen des Sensors gezeigt, das additiv dem Signalspektrum überlagert ist.

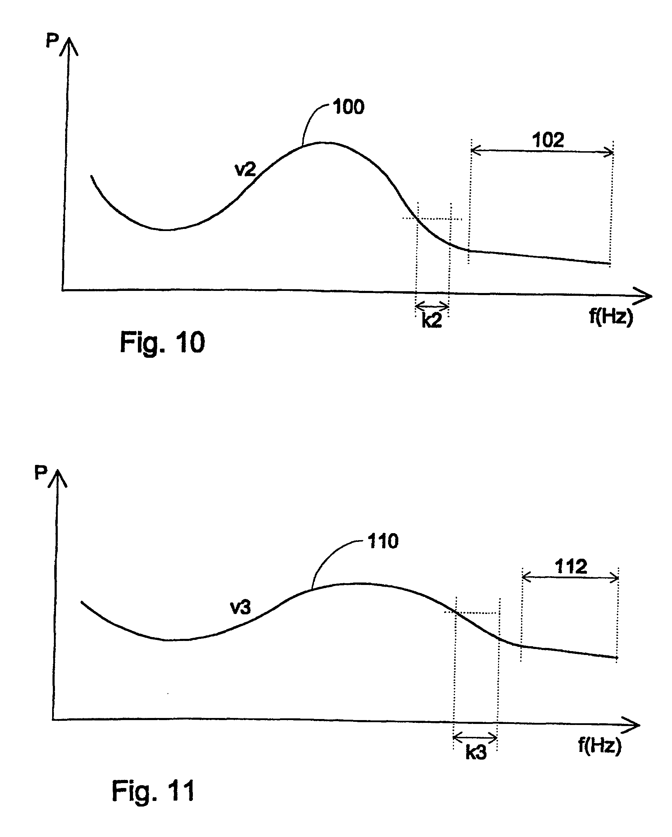

Die erhaltenen Spektren für die Geschwindigkeiten v1, v2 und v3 mit überlagertem Rauschanteil sind in den Fig. 9, 10 und 11 dargestellt. Dabei ist in Fig. 9 das Spektrum 90 für die Geschwindigkeit v1 gezeigt, während in Fig. 10 das Spektrum 100 für die Geschwindigkeit v2 gezeigt ist und in Fig. 11 das Spektrum 110 für die Geschwindigkeit v3 zu sehen ist. Mit dem Bezugszeichen 92 ist in Fig. 9 der Abschnitt des Rauschspektrums gezeigt, der zur Berechnung des Rauschpegels verwendet wird, wobei dieser Bereich in Fig. 10 mit dem Bezugszeichen 102 und in Fig. 11 mit dem Bezugszeichen 112 bezeichnet ist.

Bei bevorzugten Ausführungsbeispielen der vorliegenden Erfindung wird zur Berücksichtigung des in Fig. 8 gezeigten 1/f-Rauschens die Rauschberechnung im Frequenzbereich dynamisch mit der momentanen Geschwindigkeit mitgeführt, wie nachfolgend erläutert wird. Dabei wird immer die letzte ermittelte Geschwindigkeit als Referenz für die Berechnung des Rauschens für die aktuelle Geschwindigkeit genommen. Hierbei wird angenommen, daß die Beschleunigung zwischen zwei Meßzyklen einen bestimmten Wert nicht überschreitet. Mit der erfindungsgemäßen Vorrichtung zur berührungslosen Geschwindigkeitsmessung kann die Geschwindigkeit jeweils periodisch in aufeinanderfolgenden Meßzyklen erfaßt werden, um dieselbe, wie oben angegeben wurde, auf einer Anzeigeeinheit auszugeben. Dabei wird nun zur Ermittlung des Rauschens jeweils der Teil des Spektrums eines vorherigen Meßzyklusses verwendet, der um einen vorbestimmten Versatz, beispielsweise 94 in Fig. 9, oberhalb des in diesem vorherigen Meßzyklus erfaßten höchsten Frequenzanteils beginnt. Somit wird der Rauschanteil für den nächsten Meßzyklus bei der Darstellung von Fig. 9 durch die Ermittlung der Rauschleistung über dem Abschnitt des Spektrums, der mit dem Bezugszeichen 92 bezeichnet ist, ermittelt. Das so ermittelte Rauschen wird nachfolgend im nächsten Meßzyklus verwendet, um die vorgegebene Signalleistung, die ein Spektralanteil übersteigen muß, um daraus die Geschwindigkeit abzuleiten, festzulegen.

Überschreitet die Beschleunigung zwischen zwei Meßzyklen einen bestimmten Wert, wie es beispielsweise beim Anlaufen der Fall sein kann, so wird das System nach ein paar Sekunden auf den neuen Wert einschwingen. Innerhalb dieses Einschwingvorgangs wird durch dieses Verfahren zwar nicht die vollständige Genauigkeit erreicht, was jedoch hinsichtlich der Anwendung im Freizeitsportbereich kein Problem darstellt.

Obwohl in den Fig. 7 bis 11 die Korrektur der Geschwindigkeitsabhängigkeit der Kurvenform der Spektren bzw. die Berücksichtigung des Rauschpegels jeweils bezugnehmend auf die Erfassung des Spektralanteils mit der höchsten Frequenz, der eine vorbestimmte Signalleistung übersteigt, beschrieben wurde, ist es offensichtlich, daß diese Grundsätze auch jeweils für die Erfassung des Spektralanteils mit der geringsten Frequenz, der eine vorbestimmte Signalleistung übersteigt, gelten.

## Patentansprüche

1. Vorrichtung zur berührungslosen Messung der Geschwindigkeit eines sich über eine Oberfläche (12) bewegenden Objekts (10), mit folgenden Merkmalen:
einer Einrichtung (20) angepaßt zum Abstrahlen eines Signals mit einer festen Frequenz in einem Winkel (α) in oder entgegen der Bewegungsrichtung auf die Oberfläche (12), wobei der Winkel (α) durch die Bewegung des Objekts (10) ständig verändert wird, und zum Empfangen eines von der Oberfläche (12) reflektierten, Doppler-verschobenen Signals;
einer Einrichtung (24) angepaßt zum Aufsummieren einer Mehrzahl von zeitlich nacheinander, bei verschiedenen Winkeln (α), empfangenen Spektren von reflektierten Doppler-verschobenen Signalen zum Erzeugen eines kombinierten Spektrums (50; 60, 62, 64);
einer Einrichtung (24) angepaßt zum Erfassen des Spektralanteils mit der höchsten oder tiefsten Frequenz, der eine vorgegebene Signalleistung übersteigt, aus dem kombinierten Spektrum; und
einer Einrichtung (30) angepaßt zum Ableiten der Geschwindigkeit aus der Frequenz des erfaßten Spektralanteils.

2. vorrichtung nach Anspruch 1, bei der eine Einrichtung zum Mischen des empfangenen, von der Oberfläche (12) reflektierten, Doppler-verschobenen Signals in das Basisband vorgesehen ist.

3. Vorrichtung nach Anspruch 1 oder 2, bei der die Einrichtung (20) zum Abstrahlen zum Abstrahlen des Signals in Bewegungsrichtung auf die Oberfläche vorgesehen ist, wobei die Einrichtung (24) zum Erfassen zum Erfassen des Spektralanteils mit der höchsten Frequenz vorgesehen ist.

4. Vorrichtung nach Anspruch 1, bei der die Einrichtung (20) zum Abstrahlen zum Abstrahlen des Signals entgegen der Bewegungsrichtung auf die Oberfläche vorgesehen ist, wobei die Einrichtung (24) zum Erfassen zum Erfassen des Spektralanteils mit der tiefsten Frequenz vorgesehen ist.

5. Vorrichtung nach Anspruch 2, bei der die Einrichtung (20) zum Abstrahlen zum Abstrahlen des Signals entgegen der Bewegungsrichtung auf die Oberfläche vorgesehen ist, wobei die Einrichtung (24) zum Erfassen zum Erfassen des Spektralanteils mit der höchsten Frequenz vorgesehen ist.

6. Vorrichtung nach einem der Ansprüche 1 bis 5, die ferner eine Einrichtung zum Einstellen der vorgegebenen Signalleistung auf der Grundlage spezifischer Eigenschaften der Einrichtung zum Abstrahlen und Empfangen aufweist.

7. Vorrichtung nach Anspruch 6, bei der die spezifischen Eigenschaften das 1/f-Rauschen (80) der Einrichtung (20) zum Abstrahlen und Empfangen umfassen.

8. Vorrichtung nach einem der Ansprüche 1 bis 7, die ferner eine Einrichtung (28) zur Korrektur der abgeleiteten Geschwindigkeit zur Kompensation einer Geschwindigkeits-abhängigen Kurvenform des kombinierten Spektrums aufweist.

9. vorrichtung nach einem der Ansprüche 1 bis 8, bei der die Einrichtung zum Erfassen des Spektralanteils eine Fouriertransformation durchführt.

10. Vorrichtung nach einem der Ansprüche 1 bis 8, bei der die Einrichtung zum Erfassen des Spektralanteils eine Spektralanalyse durchführt.

11. Vorrichtung nach einem der Ansprüche 1 bis 10, bei der die Einrichtung (20) zum Abstrahlen und Empfangen ein Ultraschallsensor oder ein Mikrowellensensor ist.

12. Vorrichtung nach einem der Ansprüche 1 bis 11, die ferner eine Einrichtung zum Erfassen der Zeit und eine Einrichtung zum Ermitteln einer Durchschnittsgeschwindigkeit und einer von dem Objekt zurückgelegten Strecke aufweist.

13. Vorrichtung nach einem der Ansprüche 1 bis 12, die ferner eine Einrichtung zum Messen der Herzfrequenz aufweist.

14. Vorrichtung nach einem der Ansprüche 1 bis 13, die ferner eine Anzeigeeinrichtung (30) zum Anzeigen der abgeleiteten und/oder gemessenen Parameter aufweist.

15. Verfahren zur berührungslosen Messung der Geschwindigkeit eines sich über eine Oberfläche (12) bewegenden Objekts (10), mit folgenden Schritten:
a) Abstrahlen eines Signals mit einer festen Frequenz in einem Winkel (α) in oder entgegen der Bewegungsrichtung auf die Oberfläche (12), wobei der Winkel (α) durch die Bewegung des Objekts (10) ständig verändert wird;
b) Empfangen eines von der Oberfläche (12) reflektierten, Doppler-verschobenen Signals;
c) Wiederholen der Schritte a) und b) zum Erzeugen einer Mehrzahl von zeitlich nacheinander, bei verschiedenen Winkeln (α), empfangenen Spektren von reflektierten, Doppler-verschobenen Signalen;
d) Kombinieren der Mehrzahl von zeitlich nacheinander empfangenen Spektren von reflektierten, Doppler-verschobenen Signalen zum Erzeugen eines kombinierten Spektrums (50; 60, 62, 64);
e) Erfassen des Spektralanteils mit der höchsten oder tiefsten Frequenz, der eine vorgegebene Signalleistung übersteigt, aus dem kombinierten Spektrum; und
f) Ableiten der Geschwindigkeit aus der Frequenz des erfaßten Spektralanteils.

16. Verfahren nach Anspruch 15, bei dem das empfangene Signal nach dem Schritt b) in das Basisband gemischt wird.

17. Verfahren nach Anspruch 15 oder 16, bei dem das Signal in Bewegungsrichtung auf die Oberfläche abgestrahlt wird und der Spektralanteil mit der höchsten Frequenz erfaßt wird.

18. Verfahren nach Anspruch 15, bei dem das Signal entgegen der Bewegungsrichtung auf die Oberfläche abgestrahlt wird und der Spektralanteil mit der tiefsten Frequenz erfaßt wird.

19. Verfahren nach Anspruch 16, bei dem das Signal entgegen der Bewegungsrichtung auf die Oberfläche abgestrahlt wird und der Spektralanteil mit der höchsten Frequenz erfaßt wird.

20. Verfahren nach einem der Ansprüche 15 bis 19, bei dem zum Abstrahlen und Empfangen in den Schritten a) und b) ein Ultraschallsensor oder ein Mikrowellensensor verwendet wird.

21. Verfahren nach Anspruch 20, bei dem im Schritt (e) eine vorgegebene Signalleistung verwendet wird, die unter Berücksichtigung spezifischer Eigenschaften des Sensors ermittelt wird.

22. Verfahren nach Anspruch 21, bei dem die spezifischen Eigenschaften des Sensors das 1/f-Rauschen (80) desselben sind.

23. Verfahren nach Anspruch 22, bei dem die Schritte a) bis e) periodisch durchlaufen werden, wobei jeweils das bei einem vorherigen Durchlauf erhaltene kombinierte Spektrum beim nächsten Durchlauf verwendet wird, um das Rauschen, das bei der Ermittlung der vorgegebenen Signalleistung berücksichtigt wird, zu ermitteln.

24. verfahren nach einem der Ansprüche 15 bis 23, bei dem nach dem Schritt e) ferner ein Schritt des Korrigierens der abgeleiteten Geschwindigkeit zur Kompensation einer Geschwindigkeits-abhängigen Kurvenform des kombinierten Spektrums durchgeführt wird.

## Claims

1. A device for non-contactual measurement of the speed of an object (10) moving over a surface (12), comprising:
a means (20) adapted for radiating a signal of fixed frequency at an angle (α) onto the surface (12) in or against the direction of motion, said angle (α) being varied constantly by the movement of the object (10), and for receiving a Doppler-shifted signal reflected at the surface (12);
a means (24) adapted for summing a plurality of spectra of reflected Doppler-shifted signals, the spectra being received in temporal succession at various angles (α), so as to produce a combined spectrum (50; 60, 62, 64);
a means (24) adapted for detecting from the combined spectrum the spectral portion having the highest or lowest frequency and exceeding a predetermined signal power; and
a means (30) adapted for deducing the speed from the frequency of the detected spectral portion.

2. A device according to claim 1, wherein a means is provided for converting to the baseband the received Doppler-shifted signal which has been reflected at the surface (12).

3. A device according to claim 1 or 2, wherein said radiating means (20) is provided for radiating the signal onto the surface in the direction of motion, said detecting means (24) being provided for detecting the spectral portion having the highest frequency.

4. A device according to claim 1, wherein said radiating means (20) is provided for radiating the signal onto the surface against the direction of motion, said detecting means (24) being provided for detecting the spectral portion having the lowest frequency.

5. A device according to claim 2, wherein said radiating means (20) is provided for radiating the signal onto the surface against the direction of motion, said detecting means (24) being provided for detecting the spectral portion having the highest frequency.

6. A device according to one of the claims 1 to 5, comprising in addition a means for setting the predetermined signal power on the basis of specific properties of the means for radiating and receiving.

7. A device according to claim 6, wherein the specific properties include the l/f noise (80) of the means (20) for radiating and receiving.

8. A device according to one of the claims 1 to 7, comprising in addition a means (28) for correcting the deduced speed so as to compensate a speed-dependent curve shape of the combined spectrum.

9. A device according to one of the claims 1 to 8, wherein the means for detecting the spectral portion carries out a Fourier transform.

10. A device according to one of the claims 1 to 8, wherein the means for detecting the spectral portion carries out a spectral analysis.

11. A device according to one of the claims 1 to 10, wherein the means (20) for radiating and receiving is an ultrasonic sensor or a microwave sensor.

12. A device according to one of the claims 1 to 11, including in addition a means for detecting the time and a means for determining an average speed and a distance covered by the object.

13. A device according to one of the claims 1 to 12, including in addition a means for measuring the heart rate.

14. A device according to one of the claims 1 to 13, including in addition a display means (30) for displaying the deduced and/or measured parameters.

15. A method for non-contactual measurement of the speed of an object (10) moving over a surface (12), comprising the following steps:
a) radiating a signal of fixed frequency at an angle (α) onto the surface (12) in or against the direction of motion, said angle (α) being varied constantly by the movement of the object (10);
b) receiving a Doppler-shifted signal reflected at the surface (12);
c) repeating steps a) and b) so as to produce a plurality of spectra of reflected Doppler-shifted signals, the spectra being received in temporal succession at various angles (α);
d) combining the plurality of spectra of reflected Doppler-shifted signals received in temporal succession, so as to produce a combined spectrum (50; 60, 62, 64);
e) detecting from the combined spectrum the spectral portion having the highest or lowest frequency and exceeding a predetermined signal power; and
f) deducing the speed from the frequency of the detected spectral portion.

16. A method according to claim 15, wherein the received signal is converted to the baseband after step b).

17. A method according to claim 15 or 16, wherein the signal is radiated onto the surface in the direction of motion and the spectral portion having the highest frequency is detected.

18. A method according to claim 15, wherein the signal is radiated onto the surface against the direction of motion and the spectral portion having the lowest frequency is detected.

19. A method according to claim 16, wherein the signal is radiated onto the surface against the direction of motion and the spectral portion having the highest frequency is detected.

20. A method according to one of the claims 15 to 19, wherein an ultrasonic sensor or a microwave sensor is used for radiating and receiving in steps a) and b).

21. A method according to claim 20, wherein a predetermined signal power is used in step (e), said signal power being determined taking into account specific properties of the sensor.

22. A method according to claim 21, wherein the specific properties of the sensor are the 1/f noise (80) of said sensor.

23. A method according to claim 22, wherein steps a) to e) are run through periodically, the combined spectrum obtained in the respective previous run being used for the next run so as to ascertain the noise which is taken into account when the predetermined signal power is being ascertained.

24. A method according to one of the claims 15 to 23, wherein after step e) an additional step of correcting the deduced speed is carried out so as to compensate a speed-dependent curve shape of the combined spectrum.

## Revendications

1. Dispositif pour mesurer sans contact la vitesse d'un objet (10) se déplaçant sur une surface (12), aux caractéristiques suivantes :
un dispositif (20) adapté pour rayonner sur la surface (12), selon un angle (α), dans ou à l'encontre de la direction de déplacement, un signal à fréquence fixe, l'angle (α) étant constamment modifié par le déplacement de l'objet (10), et pour recevoir un signal à déplacement de Doppler réfléchi par la surface (12) ;
un dispositif (24) adapté pour additionner une pluralité de spectres de signaux à déplacement de Doppler réfléchis reçus successivement dans le temps, à différents angles (α), pour générer un spectre combiné (50 ; 60, 62, 64) ;
un dispositif (24) adapté pour capter, du spectre combiné, la partie spectrale à la fréquence la plus haute ou la plus basse dépassant une puissance de signal prédéterminée ; et
un dispositif (30) adapté pour dériver la vitesse de la fréquence de la partie spectrale captée.

2. Dispositif selon la revendication 1, dans lequel est prévu un dispositif destiné à mélanger le signal à déplacement de Doppler réfléchi par la surface (12) reçu à la bande de base.

3. Dispositif selon la revendication 1 ou 2, dans lequel le dispositif (20) de rayonnement est prévu pour rayonner le signal sur la surface dans la direction de déplacement, le dispositif (24) de détection étant prévu pour capter la partie spectrale à la fréquence la plus haute.

4. Dispositif selon la revendication 1, dans lequel le dispositif (20) de rayonnement est prévu pour rayonner le signal sur la surface dans la direction opposée au déplacement, le dispositif (24) de détection étant prévu pour capter la partie spectrale à la fréquence la plus basse.

5. Dispositif selon la revendication 2, dans lequel le dispositif (20) de rayonnement est prévu pour rayonner le signal sur la surface dans la direction opposée au déplacement, le dispositif (24) de détection étant prévu pour capter la partie spectrale à la fréquence la plus haute.

6. Dispositif selon l'une des revendications 1 à 5, présentant, par ailleurs, un dispositif destiné à régler la puissance de signal prédéterminée sur base de propriétés spécifiques du dispositif de rayonnement et de réception.

7. Dispositif selon la revendication 6, dans lequel les propriétés spécifiques comprennent le bruit 1/f (80) du dispositif (20) de rayonnement et de réception.

8. Dispositif selon l'une des revendications 1 à 7, présentant, par ailleurs, un dispositif (28) destiné à corriger la vitesse dérivée, pour compenser une forme de courbe fonction de la vitesse du spectre combiné.

9. Dispositif selon l'une des revendications 1 à 8, dans lequel le dispositif de détection de la partie spectrale effectue une transformation de Fourier.

10. Dispositif selon l'une des revendications 1 à 8, dans lequel le dispositif de détection de la partie spectrale effectue une analyse spectrale.

11. Dispositif selon l'une des revendications 1 à 10, dans lequel le dispositif (20) de rayonnement et de réception est un capteur ultrasonique ou un capteur à micro-ondes.

12. Dispositif selon l'une des revendications 1 à 11, présentant, par ailleurs, un dispositif destiné à détecter le temps et un dispositif destiné à déterminer une vitesse moyenne et un trajet parcouru par l'objet.

13. Dispositif selon l'une des revendications 1 à 12, présentant, par ailleurs, un dispositif destiné à mesurer la fréquence hertzienne.

14. Dispositif selon l'une des revendications 1 à 13, présentant, par ailleurs, un dispositif de visualisation (30) destiné à visualiser les paramètres dérivés et/ou mesurés.

15. Procédé pour mesurer sans contact la vitesse d'un objet (10) se déplaçant sur une surface (12), aux étapes suivantes consistant à :
a) rayonner sur la surface (12), selon un angle (α), dans ou à l'encontre de la direction de déplacement, un signal à fréquence fixe, l'angle (α) étant constamment modifié par le déplacement de l'objet (10) ;
b) recevoir un signal à déplacement de Doppler réfléchi par la surface (12) ;
c) répéter les étapes a) et b), pour générer une pluralité de spectres de signaux à déplacement de Doppler réfléchis reçus successivement dans le temps, à différents angles (α), pour générer un spectre combiné (50 ; 60, 62, 64) ;
d) capter, du spectre combiné, la partie spectrale à la fréquence la plus haute ou la plus basse dépassant une puissance de signal prédéterminée ; et
e) dériver la vitesse de la fréquence de la partie spectrale captée.

16. Procédé selon la revendication 15, dans lequel le signal reçu est, après l'étape b), mélangé à la bande de base.

17. Procédé selon la revendication 15 ou 16, dans lequel le signal est rayonné sur la surface dans la direction de déplacement et est captée la partie spectrale à la fréquence la plus haute.

18. Procédé selon la revendication 15, dans lequel le signal est rayonné sur la surface dans la direction opposée au déplacement et est captée la partie spectrale à la fréquence la plus basse.

19. Procédé selon la revendication 16, dans lequel le signal est rayonné sur la surface dans la direction opposée au déplacement et est captée la partie spectrale à la fréquence la plus haute.

20. Procédé selon l'une des revendications 15 à 19, dans lequel il est utilisé, pour le rayonnement et la réception aux étapes a) et b), un capteur ultrasonique ou un capteur à micro-ondes.

21. Procédé selon la revendication 20, dans lequel il est utilisé, à l'étape (e), une puissance de signal prédéterminée qui est déterminée en tenant compte de propriétés spécifiques du capteur.

22. Procédé selon la revendication 21, dans lequel les propriétés spécifiques du capteur sont le bruit 1/f (80) de ce dernier.

23. Procédé selon la revendication 22, dans lequel les étapes a) à e) sont réalisées périodiquement, le spectre combiné obtenu lors du passage précédent étant chaque fois utilisé lors du passage suivant, pour déterminer le bruit dont il a été compte lors de la détermination de la puissance de signal prédéterminée.

24. Procédé selon l'une des revendications 15 à 23, dans lequel il est réalisé, après l'étape e), par ailleurs, une étape de correction de la vitesse dérivée, pour compenser une forme de courbe fonction de la vitesse du spectre combiné.
